(19) Europäisches Patentamt
European Patent Office
Office européen des brevets

(11) **EP 3 540 723 A1**

(12) **EUROPEAN PATENT APPLICATION**

(43) Date of publication:
18.09.2019 Bulletin 2019/38

(21) Application number: **19159203.9**

(22) Date of filing: **25.02.2019**

(51) Int Cl.:
*G09G 5/10* (2006.01)     *G09G 3/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.03.2018 US 201862643177 P**
**22.12.2018 US 201816231395**

(71) Applicant: **HTC Corporation**
**Taoyuan City 330, (TW)**

(72) Inventors:
• **YU, Chia-Wei**
**330 Taoyuan City (TW)**
• **LIN, Chong-Da**
**330 Taoyuan City (TW)**

(74) Representative: **Schmidbauer, Andreas Konrad**
**Wagner & Geyer Partnerschaft mbB**
**Patent- und Rechtsanwälte**
**Gewürzmühlstrasse 5**
**80538 München (DE)**

(54) **HEAD MOUNTED DISPLAY AND CONTROL METHOD THEREOF**

(57)     A head mounted display and control method thereof are provided. The head mounted display includes a light transmittance controller, a light detector, a display and a controller. The light transmittance controller controls a transmittance amount of ambient light according to a control signal. The light detector detects an ambient luminance. The display generates a display image according to a driving signal. The controller generates a selected transmittance and a luminance of maximum gray value according to a setting value, the ambient luminance and a luminance of minimum gray value. The controller generates the control signal according to the selected transmittance, and generates the driving signal according to display data and the luminance of maximum gray value.

EP 3 540 723 A1

**Description**

CROSS-REFERENCE TO RELATED APPLICATION

This application claims the priority benefit of U.S. provisional application serial no. 62/643,177, filed on March 15, 2018. The entirety of the above-mentioned patent application is hereby incorporated by reference herein and made a part of this specification.

Field of the Invention

The invention relates to a head mounted display and a control method thereof and more particularly, to a head mounted display capable of adjusting a transparency of a display image and a control method thereof.

Description of Related Art

With the advancement of electronic technology, display devices have become important tools in people's daily lives. As requirements for visual quality have risen day by day recently, a head mounted display capable of presenting augmented reality (AR) images has become a mainstream display device.

In actual use, in an AR display, a transparency of a presented display image varies as an ambient luminance varies with the use in different scenarios. In a situation that the ambient luminance is high, the transparency of the display image presented by the AR display is increased, such that a user cannot view the display image clearly. Such phenomenon can be improved through increasing a luminance of the display image. However, in case the luminance of the display image is regardless increased, it may cause a background to be covered by the display image, which may affect the safety if the user while walking.

SUMMARY

The invention provides a head mounted display and a control method thereof capable of adjusting a transparency of a display image, so as to effectively enhance the safety and display performance of the head mounted display in different environments.

A head mounted display of the invention includes a light transmittance controller, a light detector, a display and a controller. The light transmittance controller controls a transmittance amount of ambient light according to a control signal. The light detector detects an ambient luminance of the ambient light. The display generates a display image according to a driving signal. The controller generates a selected transmittance and a maximum gray luminance value according to a setting value, the ambient luminance and the minimum gray luminance value. The controller generates the control signal according to the selected transmittance and generates the driving signal according to display data and the maximum gray luminance value.

A control method of a head mounted display of the invention includes: detecting an ambient luminance of ambient light; generating a selected transmittance and a maximum gray luminance value according to a setting value, the ambient luminance and the minimum gray luminance value, generating a control signal according to the selected transmittance and generating a driving signal according to display data and the maximum gray luminance value; generating a display image according to the driving signal; and controlling a transmittance amount of the ambient light according to the control signal.

To sum up, the head mounted display of the invention can adjust the transmittance of a generated augmented reality (AR) display image according to the ambient luminance. In this way, the luminance and the transmittance of the display image generated by the head mounted display can be adjusted according to the actual ambient luminance, thereby enhancing the display performance in a premise that both the display quality and the safety can be kept.

In order to make the aforementioned and other features and advantages of the invention more comprehensible, several embodiments accompanied with figures are described in detail below.

BRIEF DESCRIPTION OF THE DRAWINGS

FIG. 1 is a schematic diagram illustrating a head mounted display according to an embodiment of the invention.
FIG. 2 is a schematic diagram illustrating the operation of a head mounted display device according to an embodiment of the invention.
FIG. 3 is a schematic diagram illustrating a head mounted display according to another embodiment of the invention:

FIG. 4A is a graph illustrating a relationship between the ambient luminance and the selected transmittance according to the embodiments of the invention.

FIG. 4B is a graph illustrating a relationship between the ambient luminance and the maximum gray luminance value according to the embodiments of the invention.

FIG. 5 is a flowchart illustrating a control method of a head mounted display according to an embodiment of the invention.

FIG. 6 is a flowchart illustrating a control method of a head mounted display according to another embodiment of the invention.

DESCRIPTION OF EMBODIMENTS

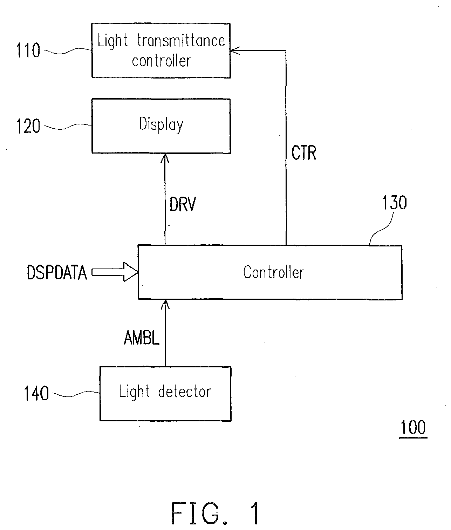

Referring to FIG. 1, FIG. 1 is a schematic diagram illustrating a head mounted display according to an embodiment of the invention. A head mounted display 100 includes a light transmittance controller 110, a display 120, a controller 130 and a light detector 140. The light transmittance controller 110 is coupled to the controller 130. The light transmittance controller 110 controls a transmittance amount of ambient light according to a control signal CTR. The light transmittance controller 110 controls the transmittance amount of the ambient light which is transmitted to the internal of the head mounted display. In the present embodiment, the light transmittance controller 110 may be an electrochromic display (ECD).

The display 120 is coupled to the controller 130 and configured to generate a display image according to a driving signal DRV. The display image generated by the display 120 may be an augmented reality (AR) image, and the display 120 may adjust a luminance of the display image according to the driving signal DRV. The light detector 140 is coupled to the controller 130. The light detector 140 is configured to detect an ambient luminance AMBL of the ambient light and send information related to the detected ambient luminance AMBL to the controller 130. The controller 130 generates a selected transmittance and a maximum gray luminance value according to a setting value, the ambient luminance AMBL and a minimum gray luminance value. The controller 130 also generates a control signal CTR according to the selected transmittance and generates the driving signal DRV according to display data DSPDATA and the maximum gray luminance value.

In addition, the setting value is used to set a transmittance state of the display image generated by the display 120 and may be input from the external of the controller 130. In the embodiments of the invention, the setting value may be input by a user. Additionally, in the embodiments of the invention, the setting value CR may be equal to $\frac{W255 + ALIT \times ECDTr}{B0 + ALIT \times ECDTr}$, wherein W255 represents the maximum gray luminance value, B0 represents the minimum gray luminance value, ECDTr represents the selected transmittance, and the ALIT represents the ambient luminance.

According to the description set forth above, after completing the setting of the setting value CR, the controller 130 may obtain the maximum gray luminance value (=W255) and the selected transmittance (=ECDTr) according to the given minimum gray luminance value (=B0) and the detected ambient luminance (=ALIT). The controller 130 may also generate the control signal CTR according to the selected transmittance, thereby adjusting the light transmittance controller 110 according to the selected transmittance and controlling the light transmittance controller 110 to adjust the transmittance amount of the ambient light.

Furthermore, the controller 130 may set the maximum gray luminance value according to the ambient luminance AMBL and the setting value CR and then calculate the selected transmittance (=ECDTr) according to the relational formula between the setting value CR and the maximum gray luminance value (=W255), the minimum gray luminance value (=B0), the selected transmittance (=ECDTr) and the ambient luminance AMBL.

On the other hand, a relationship among the setting value CR, the ambient luminance AMBL, the minimum gray luminance value (=B0), the selected transmittance (=ECDTr) and the maximum gray luminance value (=W255) may be established in a look-up table. For example, the look-up table may be as shown in Table 1:

Table 1:

| Environment | Ambient luminance (nit) | ECDTr | W255 @CR=2 (nit) | W255 @CR=10 (nit) | W255 @CR=6 (nit) |
|---|---|---|---|---|---|
| Dark | 0.1 | 100% | 0.7 | 3.9 | 2.3 |
| | 1 | 100% | 1.6 | 12 | 6.8 |
| | 15 | 100% | 15.6 | 138 | 76.8 |

(continued)

| Environment | Ambient luminance (nit) | ECDTr | W255 @CR=2 (nit) | W255 @CR=10 (nit) | W255 @CR=6 (nit) |
|---|---|---|---|---|---|
| Indoor | 50 | 100% | 50.6 | 453 | 251.8 |
| | 300 | 98% | 294.6 | 2649 | 1471.8 |
| | 600 | 55% | 330.6 | 2973 | 1651.8 |
| | 1000 | 35% | 350.6 | 3153 | 1751.8 |
| Outdoor | 2000 | 18% | 360.6 | 3243 | 1801.8 |
| | 3000 | 13% | 390.6 | 3513 | 1951.8 |
| | 3500 | 12% | 420.6 | 3783 | 2101.8 |
| | 4000 | 10.7% | 428.6 | 3855 | 2141.8 |
| | 4500 | 9.7% | 437.1 | 3931.5 | 2184.3 |
| | 5000 | 8.9% | 445.6 | 4008 | 2226.8 |
| | 6000 | 8% | 480.6 | 4323 | 2401.8 |

The corresponding minimum gray luminance value in Table 1, for example, is equal to 0.3 nit. According to a degree of the ambient luminance AMBL, environments may be divided into three types, which are dark, indoor and outdoor. According to the setting value CR, different maximum gray luminance values (W255) may be set. In the present embodiment, the setting value CR is used to correspondingly set an image transparency of the display image, wherein the setting value CR is negatively correlated to the image transparency. According to the detected ambient luminance AMBL, the maximum gray luminance value (W255) may be calculated according to the selected transmittance (ECDTr) obtained according to the look-up table.

It should be noted that Table 1 does not record all possible setting values CR. When the setting value CR is not recorded in Table 1, the controller 130 may calculate by means of an interpolation or an extrapolation method and obtain the corresponding maximum gray luminance value (W255) and the selected transmittance (ECDTr).

It is to be additionally mentioned that the look-up table may be configured in any storage device in the controller 130 or may be stored in a storage device in any form outside the controller 130, which is not particularly limited.

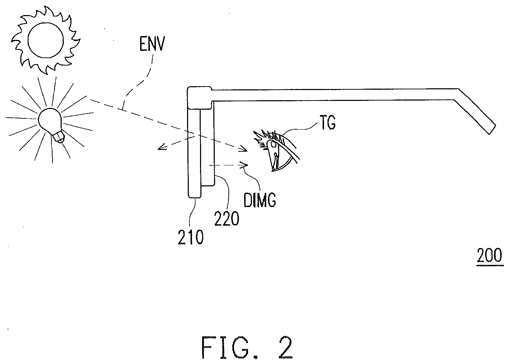

Hereinafter, referring to FIG. 2, FIG. 2 is a schematic diagram illustrating the operation of a head mounted display device according to an embodiment of the invention. A head mounted display device 200 has a light transmittance controller 210 and a display 220. The light transmittance controller 210 and the display 220 are sequentially disposed in front of a target area TG. The light transmittance controller 210 is configured to control a transmittance amount of ambient light ENV which is transmitted to the target area TG, and the display 220 projects a display image DIMG to the target area TG, wherein the target area TG may be a position of a user's eye.

In the present embodiment, through detecting an ambient luminance, the head mounted display device 200 may synchronously adjust the transmittance amount of the ambient light ENV which is transmitted to the target area TG and adjust a luminance of the display image DIMG generated by the display 220. The display quality may be enhanced in a condition that the safety is kept.

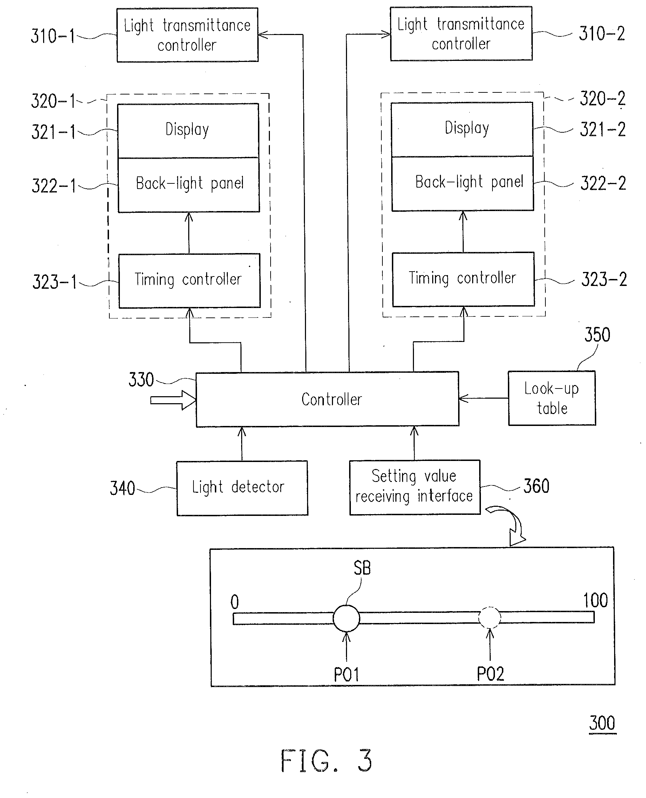

Hereinafter, referring to FIG. 3, FIG. 3 is a schematic diagram illustrating a head mounted display according to another embodiment of the invention. A head mounted display 300 includes light transmittance controllers 310-1 and 310-2, displays 320-1 and 320-2, a controller 330, a light detector 340, a look-up table 350 and a setting value receiving interface 360. In the present embodiment, the light transmittance controller 310-1 and the display 320-1 may correspond to a first eye of a user, and the light transmittance controller 310-2 and the display 320-2 may correspond to a second eye of the user. The controller 330 is simultaneously coupled to the light transmittance controllers 310-1 and 310-2 and the displays 320-1 and 320-2. The light detector 340 is configured to detect an ambient luminance of ambient light and provide information related to the ambient luminance to the controller 330. The setting value receiving interface 360 is coupled to the controller 330 and configured to receive a setting value input by the user. The controller 330 may perform a look-up operation in the look-up table 350 according to the ambient luminance and the setting value, or alternatively, further calculate a selected transmittance and a maximum gray luminance value by means of an interpolation or an extrapolation operation.

The setting value receiving interface 360 may be a graphical interface. In the present embodiment, the setting value receiving interface 360 provides a movable cursor SB. The user may, for example, adjust a position of the cursor SB through a touch medium, thereby providing a corresponding setting value to the controller 330. The cursor SB of the present embodiment may move at a transmittance ranging from 0 to 100, and when intending to increase the transmittance of the display image, the user may move the cursor SB from a position PO1 to a position PO2. By contrast, when intending to decrease the transmittance of the display image, the user may move the cursor SB from the position PO2 to the position PO1. The setting value receiving interface 360 may generate the setting value according to a position where the cursor SB is located and provide the setting value to the controller 330.

It is to be additionally mentioned that in the present embodiment, the display 320-1 includes a display panel 321-1, a back-light panel 322-1 and a timing controller 323-1. The display panel 321-1 and the back-light panel 322-1 are disposed by overlapping with each other, and the timing controller 323-1 is coupled to the display panel 321-1 and the back-light panel 322-1. The timing controller 323-1 operates and controls the display panel 321-1 and the back-light panel 322-1 to perform the operation of displaying the display image. On the other hand, the display 320-2 includes a display panel 321-2, a back-light panel 322-2 and a timing controller 323-2. The display panel 321-2 and the back-light panel 322-2 are disposed by overlapping with each other, and the timing controller 323-2 is coupled to the display panel 321-2 and the back-light panel 322-2. The timing controller 323-2 operates and controls the display panel 321-2 and the back-light panel 322-2 to perform the operation of displaying the display image. The displays 320-1 and 320-2 as described above may be displays well-known to persons with ordinary skills in the art, and related operation details thereof are also well-known to the persons with ordinary skills in the art and will not be repeatedly described.

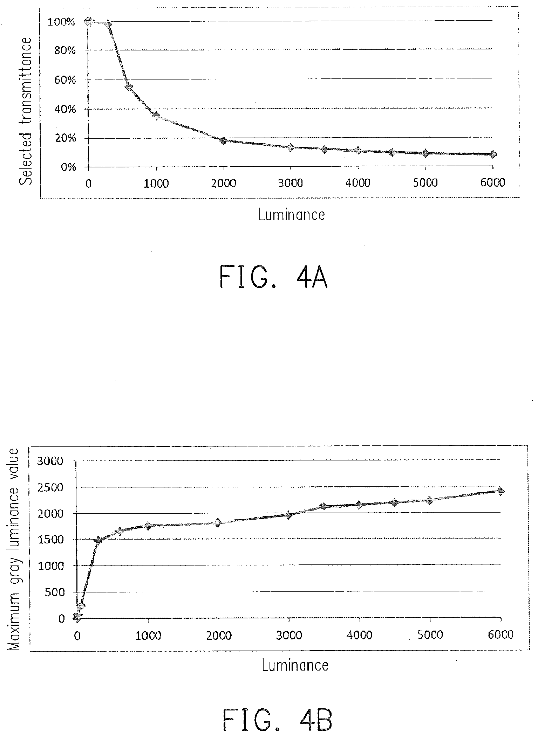

Hereinafter, referring to FIG. 4A and FIG. 4B, wherein FIG. 4A is a graph illustrating a relationship between the ambient luminance and the selected transmittance according to the embodiments of the invention, and FIG. 4B is a graph illustrating a relationship between the ambient luminance and the maximum gray luminance value according to the embodiments of the invention. According to the illustration of FIG. 4A, the ambient luminance and the selected transmittance used for controlling the light transmittance controller are negatively correlated to each other. When the ambient luminance is increased, the selected transmittance of the light transmittance controller is correspondingly decreased. According to FIG. 4B, the ambient luminance and the set maximum gray luminance value are positively correlated to each other. Namely, when the ambient luminance is increased, the maximum gray luminance value is correspondingly increased.

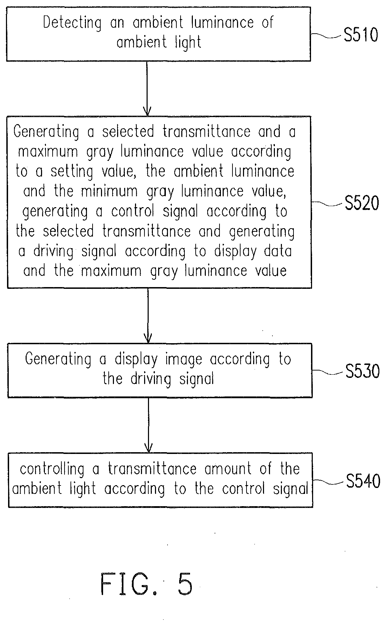

Hereinafter, referring to FIG. 5, FIG. 5 is a flowchart illustrating a control method of a head mounted display according to an embodiment of the invention. In step S510, an ambient luminance of ambient light is detected. In step S520, a selected transmittance and a maximum gray luminance value are generated according to a setting value, the ambient luminance and a minimum gray luminance value, a control signal is generated according to the selected transmittance, and a driving signal is generated according to display data and the maximum gray luminance value. In step S530, a display image is generated according to the driving signal, and in step S540, a transmittance amount of the ambient light is controlled according to the control signal.

Regarding the implementation details of the steps set forth above, they have been described in detail in the embodiments above and will not be repeated.

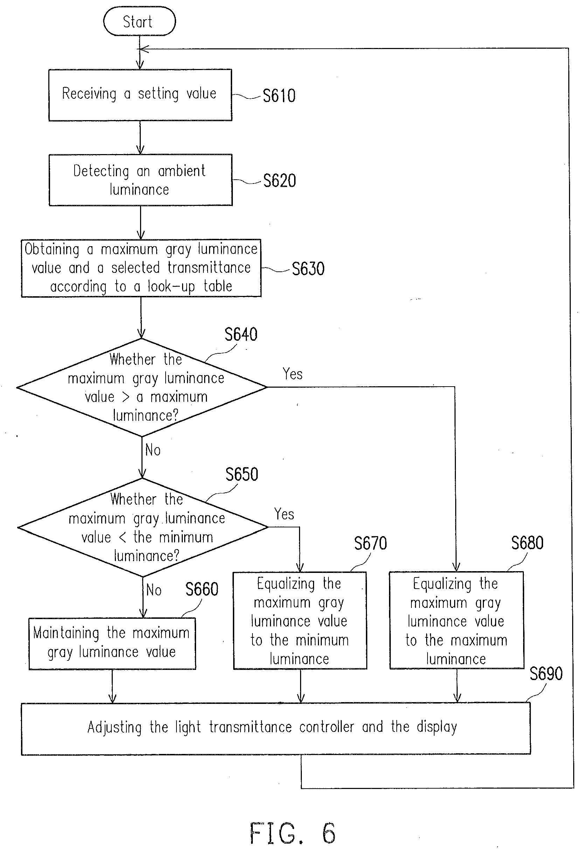

Referring to FIG. 6, FIG. 6 is a flowchart illustrating a control method of a head mounted display according to another embodiment of the invention. In step S610, a setting value is received. In step S620, an ambient luminance is detected. In step S630, a maximum gray luminance value and a selected transmittance are obtained according to a look-up table. Then, in steps S640 and S650, an amount of the maximum gray luminance value is determined. In step S640, whether the maximum gray luminance value is greater than a maximum luminance capable of being presented by the display of the head mounted display. If the maximum gray luminance value is greater than the maximum luminance, the maximum gray luminance value is set to be equal to the maximum luminance capable of being presented by the display (step S680). On the contrary, if the maximum gray luminance value is not greater than the maximum luminance, step S650 is performed.

In step S650, whether the maximum gray luminance value is less than a minimum luminance capable of being presented by the display of the head mounted display. If the maximum gray luminance value is less than the minimum luminance, the maximum gray luminance value is set to be equal to the minimum luminance capable of being presented by the display (step S670). On the contrary, if the maximum gray luminance value is not less than the minimum luminance, step S660 is performed.

In step S660, the maximum gray luminance value is maintained, and in step S690, the operations of the display and the light transmittance controller are respectively adjusted according to the maximum gray luminance value and the selected transmittance.

It is to be additionally mentioned that the sequence of performing steps S640 and S650 described above is not particularly limited, wherein steps S640 and S650 may also be synchronously performed, or step S650 may be performed before step S640.

In view of the foregoing, the head mounted display of the invention can adjust the luminance of the display image and the transmittance amount of the ambient light of the light transmittance controller according to the ambient luminance and the setting value for setting the transmittance of the display image. In this way, in different environmental scenarios, the head mounted display, in the condition that the safety can be kept, can optimize the quality of the generated display image to enhance overall performance of the head mounted display.

Although the invention has been described with reference to the above embodiments, it will be apparent to one of the ordinary skill in the art that modifications to the described embodiment may be made without departing from the spirit of the invention. Accordingly, the scope of the invention will be defined by the attached claims not by the above detailed descriptions.

**Claims**

1. A head mounted display, comprising:

   a light transmittance controller, controlling a transmittance amount of ambient light according to a control signal;
   a light detector, detecting an ambient luminance of the ambient light;
   a display, generating a display image according to a driving signal; and
   a controller, generating a selected transmittance and a maximum gray luminance value according to a setting value, the ambient luminance and a minimum gray luminance value, generating the control signal according to the selected transmittance, and generating the driving signal according to display data and the maximum gray luminance value.

2. The head mounted display according to claim 1, wherein the display projects the display image to a target area, and the light transmittance controller is configured to control the transmittance amount of the ambient light which is transmitted to the target area.

3. The head mounted display according to claim 1, wherein the setting value is equal to $\dfrac{W255+ALIT \times ECDTr}{B0+ALIT \times ECDTr}$, wherein W255 represents the maximum gray luminance value, B0 represents the minimum gray luminance value, ECDTr represents the selected transmittance, and ALIT represents the ambient luminance.

4. The head mounted display according to claim 1, further comprising:
   a look-up table, coupled to the controller and configured to record the setting value, the ambient luminance, the minimum gray luminance value and a relationship between the selected transmittance and the maximum gray luminance value.

5. The head mounted display according to claim 1, further comprising:
   a setting value receiving interface, coupled to the controller and configured to receive the setting value.

6. The head mounted display according to claim 1, wherein the ambient luminance is positively correlated to the maximum gray luminance value.

7. The head mounted display according to claim 1, wherein the ambient luminance is negatively correlated to the selected transmittance.

8. The head mounted display according to claim 1, wherein the setting value is negatively correlated to a transparency of the display image.

9. The head mounted display according to claim 1, wherein the "controller determines whether the maximum gray luminance value is greater than a maximum luminance; the controller equalizes the maximum gray luminance value to the maximum luminance when the maximum gray luminance value is greater than the maximum luminance.

10. The head mounted display according to claim 1, wherein the controller determines whether the maximum gray luminance value is less than a minimum luminance; the controller equalizes the maximum gray luminance value to the minimum luminance when the maximum gray luminance value is less than the minimum luminance.

11. A control method of a head mounted display, comprising:

    detecting an ambient luminance of ambient light;
    generating a selected transmittance and a maximum gray luminance value according to a setting value, the ambient luminance and a minimum gray luminance value, generating a control signal according to the selected transmittance, and generating a driving signal according to display data and the maximum gray luminance value; generating a display image according to the driving signal; and controlling a transmittance amount of the ambient light according to the control signal.

12. The control method according to claim 11, wherein the setting value is equal to $\dfrac{W255 + ALIT \times ECDTr}{B0 + ALIT \times ECDTr}$, wherein W255 represents the maximum gray luminance value, B0 represents the minimum gray luminance value, ECDTr represents the selected transmittance, and ALIT represents the ambient luminance.

13. The control method according to claim 11, further comprising:
determining whether the maximum gray luminance value is greater than a maximum luminance; equalizing the maximum gray luminance value to the maximum luminance when the maximum gray luminance value is greater than the maximum luminance.

14. The control method according to claim 11, further comprising:
determining whether the maximum gray luminance value is less than a minimum luminance; equalizing the maximum gray luminance value to the minimum luminance when the maximum gray luminance value is less than the minimum luminance.

110 — Light transmittance controller

120 — Display

DSPDATA ⇒ Controller — 130

CTR

DRV

AMBL

140 — Light detector

100

FIG. 1

ENV

TG

DIMG

220

210

200

FIG. 2

310-1 — Light transmittance controller

Light transmittance controller — 310-2

320-1

321-1 — Display

322-1 — Back-light panel

323-1 — Timing controller

320-2

Display — 321-2

Back-light panel — 322-2

Timing controller — 323-2

350

330 — Controller

Look-up table

340 — Light detector

Setting value receiving interface — 360

SB

0                                              100

PO1                        PO2

300

FIG. 3

FIG. 4A

FIG. 4B

Detecting an ambient luminance of ambient light — S510

Generating a selected transmittance and a maximum gray luminance value according to a setting value, the ambient luminance and the minimum gray luminance value, generating a control signal according to the selected transmittance and generating a driving signal according to display data and the maximum gray luminance value — S520

Generating a display image according to the driving signal — S530

controlling a transmittance amount of the ambient light according to the control signal — S540

FIG. 5

Start

Receiving a setting value — S610

Detecting an ambient luminance — S620

Obtaining a maximum gray luminance value and a selected transmittance according to a look-up table — S630

S640

Whether the maximum gray luminance value > a maximum luminance?

No

Yes

S650

Whether the maximum gray luminance value < the minimum luminance?

No    S660

Yes

S670

Maintaining the maximum gray luminance value

Equalizing the maximum gray luminance value to the minimum luminance

S680

Equalizing the maximum gray luminance value to the maximum luminance

S690

Adjusting the light transmittance controller and the display

FIG. 6

Europäisches
Patentamt

European
Patent Office

Office européen
des brevets

**EUROPEAN SEARCH REPORT**

Application Number

EP 19 15 9203

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/345391 A1 (USUI YUUMA [JP] ET AL) 30 November 2017 (2017-11-30) | 1-8,11, 12 | INV. G09G5/10 |
| Y | * par. 1, 2, 9, 34-37, 44, 46, 47, 51, 56, 57, 61, 77-80, 84, 88-95 fig. 1-4, 7, 13 * ----- | 9,10,13, 14 | G09G3/00 |
| Y | US 2014/375696 A1 (CHUANG YU-HSING [TW] ET AL) 25 December 2014 (2014-12-25) * fig. 2, par. 23 * ----- | 9,10,13, 14 | |

TECHNICAL FIELDS
SEARCHED      (IPC)

G09G

The present search report has been drawn up for all claims

| Place of search | Date of completion of the search | Examiner |
|---|---|---|
| Munich | 22 March 2019 | Bader, Arnaud |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

................................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 19 15 9203

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2019

| Patent document cited in search report | | Publication date | Patent family member(s) | | Publication date |
|---|---|---|---|---|---|
| US 2017345391 | A1 | 30-11-2017 | CN 107111145 | A | 29-08-2017 |
| | | | EP 3245553 | A1 | 22-11-2017 |
| | | | KR 20170092690 | A | 11-08-2017 |
| | | | US 2017345391 | A1 | 30-11-2017 |
| US 2014375696 | A1 | 25-12-2014 | TW 201501108 | A | 01-01-2015 |
| | | | US 2014375696 | A1 | 25-12-2014 |

EPO FORM P0459

For more details about this annex : see Official Journal of the European Patent Office, No. 12/82

**EP 3 540 723 A1**

**Patent documents cited in the description**

- US 62643177 A